# EUROPÄISCHE PATENTANMELDUNG

(11) **EP 1 555 518 A2**
(43) Veröffentlichungstag der Anmeldung: **20.07.2005**
(21) Anmeldenummer: 04105834.8
(22) Anmeldetag: 17.11.2004
(51) Int. Cl.: G01L 19/06, G01L 23/08

(54) **Anordnung zur Druckerfassung in einem Druckraum, insbesondere in einem Brennraum einer Brennkraftmaschine**

(30) Priorität: 15.01.2004 DE 102004002089
(71) Anmelder: ROBERT BOSCH GMBH, 70442 Stuttgart (DE)
(72) Erfinder: Glock, Oliver, 70378, Stuttgart (DE); Didra, Hans-Peter, 72127, Kusterdingen-Jettenburg (DE); Bauer, Michael, 70839, Gerlingen (DE); Jungemann, Markus, 70499, Stuttgart (DE)

(57) **Zusammenfassung**

Es wird eine Anordnung zur Druckerfassung in einem Druckraum (10), insbesondere in einem Brennraum einer Brennkraftmaschine vorgeschlagen. Der Druckraum (10) weist eine Druckraumwand (11) mit einer Bohrung (13) auf, die vom Druckraum (10) zu einem Drucksensor (20) führt und über die der im Druckraum (10) herrschende Druck auf den Drucksensor (20) übertragen wird. In die Bohrung (13) ist ein Einsatz (30) mit mindestens einem druckübertragenden Kanal (31) eingesetzt.

## Beschreibung

Die Erfindung betrifft eine Anordnung zur Druckerfassung in einem Druckraum, insbesondere in einem Brennraum einer Brennkraftmaschine, nach dem Oberbegriff des Anspruchs 1.

### Stand der Technik

Anordnungen zur Druckerfassung von heißen Druckmedien, welche zum Beispiel zur Messung des Brennraumdrucks an Brennkraftmaschinen bestimmt sind, sind so aufgebaut, dass der Drucksensor vor den im Brennraum auftretenden hohen Temperaturen zu schützen ist. Dabei ist aus EP 702 784 B1 bekannt, den Drucksensor von der Wärmequelle distanziert am Gehäuse der Brennkraftmaschine anzuordnen und zwischen Drucksensor und Brennraum eine Bohrung vorzusehen, die brennraumseitig mit einer Membran verschlossen ist und in der ein Stempel geführt ist, der den auf die Membran wirkenden Druck auf den Drucksensor überträgt.

Darüber hinaus ist aus EP 145 146 A1 bekannt, an Stelle des Stempels eine gut wärmeleitende, inkompressible Flüssigkeit zur Druckübertragung zu verwenden.

Aufgabe der vorliegenden Erfindung ist es, eine Anordnung zur Druckerfassung von heißen Druckmedien zu schaffen, die einfach realisierbar ist.

### Vorteile der Erfindung

Die erfindungsgemäße Anordnung mit den kennzeichnenden Maßnahmen des Anspruchs 1 hat den Vorteil, dass eine einfache Druckerfassung von heißen Druckmedien möglich ist, die ohne ein bewegliches mechanisches Bauteil zur Druckübertragung auskommt. Der am Einsatz ausgebildete druckübertragende Kanal ist fertigungstechnisch einfach herstellbar. Die Verwendung von Serien-Hochdrucksensoren mit beispielsweise einer 200 bar Membran ist möglich.

Vorteilhafte Weiterbildungen der Erfindung sind durch die Maßnahmen der Unteransprüche möglich. Mittels eines sich verengenden oder sich erweiternden Verlaufes des druckübertragenden Kanals lässt sich auf einfache Weise eine gedrosselte bzw. entdrosselte Druckübertragung vom Druckraum zum Drucksensor realisieren. Eine gedrosselte Druckübertragung liegt vor, wenn im Eingangsbereich des druckübertagenden Kanals mit relativ geringem Querschnitt die Strömung Schallgeschwindigkeit erreicht. Der Druckanstieg im relativ großen Volumen vor dem Drucksensor wird dann verzögert, wodurch störende Resonanzfrequenzen des Übertragungskanals gedämpft werden. Jedoch gehen anderseits dadurch auch Signalinformationen verloren. Bei der entdrosselte Drückübertagung wird dieser Nachteil durch die stetige Kanalverengung verhindert, da im Eingangsbereich des druckübertagenden Kanals ein großer Querschnitt vorliegt und das Volumen vor dem Drucksensor klein ist. Hierbei genügt eine geringere Strömungsgeschwindigkeit, um das Drucksignal zu übertragen. Jedoch kann dabei nicht ausgeschlossen werden, dass Resonanzen das Nutzsignal überlagern. Besonders zweckmäßig ist es, einen an die Bohrung angepassten zylindrischen Einsatz mit mindestens einem druckübertagenden Kanal zu verwenden. Zweckmäßig ist ferner die Integration mindestens eines druckschwingungsdämpfenden Raumes. Der druckschwingungsdämpfende Raum bewirkt, dass die Entstehung von Druckschwingungen und Resonanzen bei der Druckübertragung auf den Drucksensor weitestgehend vermieden wird. Das Entstehen von Pfeifschwingungen im Sensorkopf wird somit ebenfalls unterbunden. Dazu ist es vorteilhaft, wenn der mindestens eine axial verlaufende, druckübertragende Kanal radial eingearbeitete Ringräume zur Dämpfung von Druckschwingungen aufweist. Die in die Mantelfläche des Einsatz eingebrachten druckschwingungsdämpfenden Ringräume sind fertigungstechnisch einfach herstellbar. Ein komplett auswechselbares Bauteil mit Einsatz und Drucksensor lässt sich dadurch schaffen, indem Einsatz und Drucksensor in einem beispielsweise einschraubbaren Bauteil integriert sind.

### Zeichnung

Ausführungsbeispiele der Erfindung sind in der Zeichnung dargestellt und in der nachfolgenden Beschreibung näher erläutert.

Es zeigen
- Figur 1: eine Schnittdarstellung durch ein erstes Ausführungsbeispiel der erfindungsgemäßen Anordnung,
- Figur 2: eine Schnittdarstellung durch einen Einsatz gemäß einer zweiten Ausführungsform für das Ausführungsbeispiel in Figur 1,
- Figur 3a: eine Schnittdarstellung durch den Einsatz nach der Linie IIIa - IIIa in Figur 1,
- Figur 3b: eine Draufsicht auf den Einsatz in Richtung III b in Figur 2,
- Figur 4: eine Schnittdarstellung durch ein zweites Ausführungsbeispiel der erfindungsgemäßen Anordnung,
- Figur 5a: eine Schnittdarstellung durch einen Einsatz nach der Linie V - V in Figur 4 gemäß einer ersten Ausführungsform für das Ausführungsbeispiel in Figur 4,
- Figur 5b: eine Schnittdarstellung eines Einsatzes nach der Linie V - V in Figur 4 gemäß einer zweiten Ausführungsform für das Ausführungsbeispiel in Figur 4 und
- Figur 6: ein drittes Ausführungsbeispiel der erfindungsgemäßen Anordnung zur Druckerfassung.

### Beschreibung der Ausführungsbeispiele

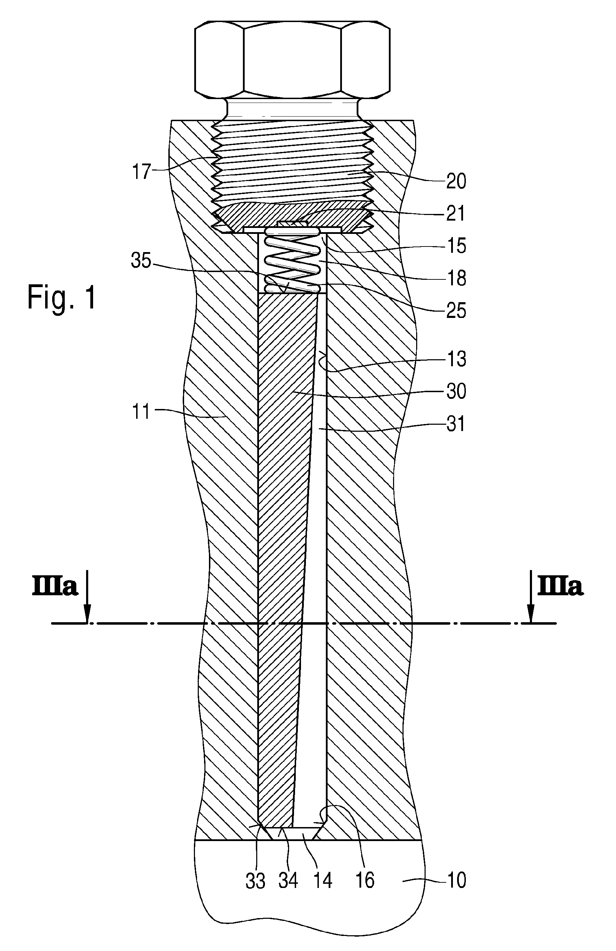

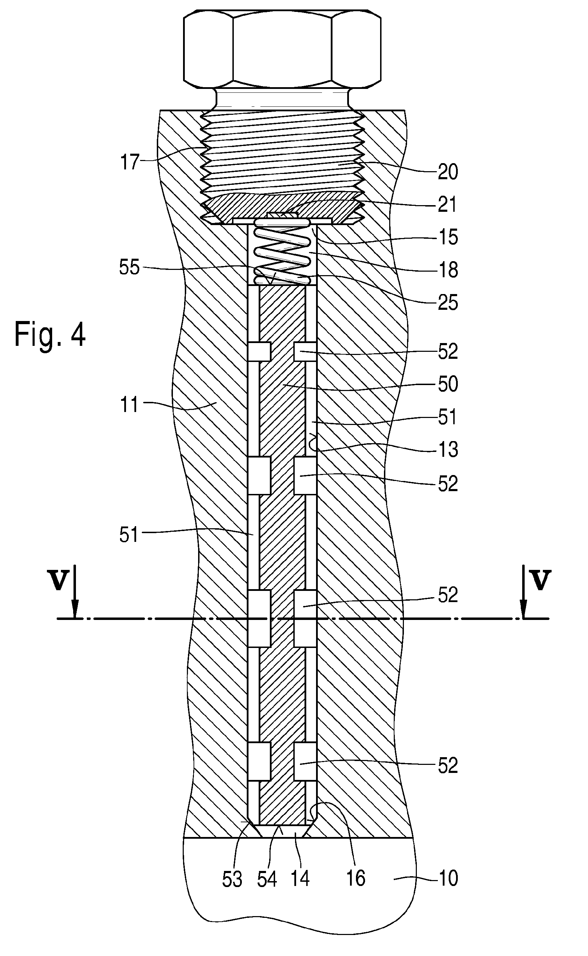

In Figur 1, 4 und 6 ist mit 10 ein vom Brennraum einer Brennkraftmaschine gebildeter Druckraum bezeichnet, in dem der Druck des heißen Verbrennungsgases zu erfassen ist. Der Druckraum 10 ist dabei von einer Brennraumwand 11 der Brennkraftmaschine umschlossen. In die Brennraumwand 11 ist eine Bohrung 13 mit einer druckraumseitigen, inneren Öffnung 14 und einer sensorseitigen, äußeren Öffnung 15 eingebracht. An der äußeren Öffnung 15 ist eine Aufnahme 17 ausgebildet, in die ein Drucksensor 20 mit einer Sensorfläche 21 eingeschraubt ist. Die Sensorfläche 21 weist in eine Druckkammer 18. Die Bohrung 13 ist beim Ausführungsbeispiel gemäß Figur 1 und 4 an der inneren Öffnung 14 mit einem konischen Abschnitt 16 ausgeführt.

Beim Ausführungsbeispiel gemäß Figur 1 befindet sich in der Bohrung 13 ein Einsatz 30 mit einer druckraumseitigen Stirnfläche 34 und einer sensorseitigen Stirnfläche 35. Der Einsatz 30 weist axial verlaufend beispielsweise einen druckübertragende Kanale 31 auf, der den Druckraum 10 mit der Druckkammer 18 verbindet. Die Druckkammer 18 ist dabei der Sensorfläche 21 vorgelagert und ist zwischen der sensorseitigen Stirnfläche 35 des Einsatzes 30 und der Sensorfläche 21 innerhalb der Bohrung 13 ausgebildet. Die Druckkammer 18 kann aber auch zumindest teilweise in die Aufnahme 17 für den Drucksensor 20 integriert sein. Der Kanal 31 verjüngt bzw. verengt sich von der druckraumseitigen Stirnfläche 34 hin zur sensorseitigen Stirnfläche 35 keilförmig. Durch die Verengung des Kanals 31 zur Druckkammer 18 hin wird die Druckübertragung vom Druckraum 10 zum Drucksensor 20 entdrosselt.

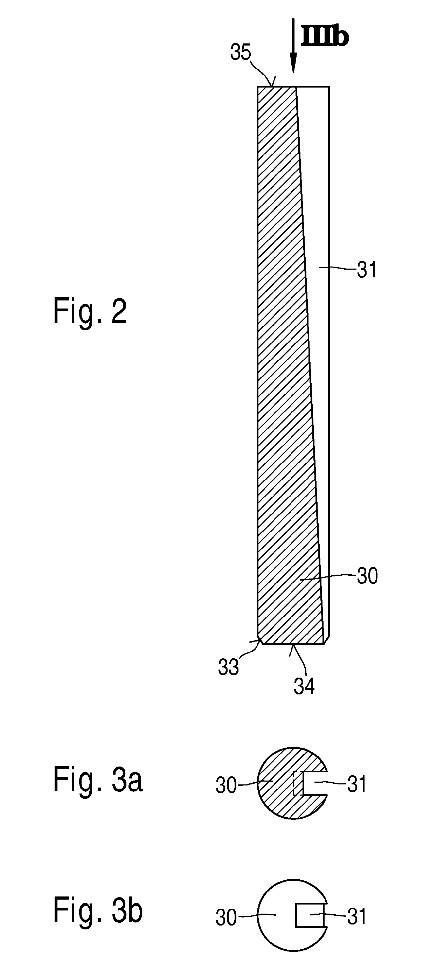

In Figur 2 ist eine zweite Ausführungsform des Einsatzes 31 für das Ausführungsbeispiel in Figur 1 gezeigt. Hierbei erweitert sich der Kanal 31 zur Druckübertragung von der druckraumseitigen Stirnfläche 34 zur sensorseitigen Stirnfläche 35 hin keilförmig. Durch diesen sich erweiternden Verlauf des Kanals 31 entsteht eine gedrosselte Druckübertragung vom Druckraum 10 zur Druckkammer 18 und damit zum Drucksensor 20 hin.

Der Einsatz 30 ist an die Bohrung 13 im Durchmesser angepasst und im Wesentlichen spielfrei in die Bohrung 13 eingesetzt. An der druckraumseitigen Stirnfläche 34 weist der Einsatz 30 eine konische Stützfläche 33 auf, die am konischen Abschnitt 16 der Bohrung 13 aufliegt, so dass der Einsatz 30 in Richtung des Druckraums 10 in der Bohrung 13 festgelegt ist. Um eine axiale Verschiebung des Einsatzes 30 innerhalb der Bohrung 13 zu verhindern, ist zwischen einer Auflagefläche am Drucksensor 20 und der sensorseitigen Stirnfläche 35 des Einsatzes 30 eine Druckfeder 25 angeordnet, so dass der Einsatz 30 innerhalb der Bohrung 13 axial vorgespannt ist. Der im Einsatz 30 der Figuren 1 und 2 ausgebildete Kanal 31 weist beispielsweise die in Figur 3a und 3b dargestellten rechteckförmigen Querschnittsprofile auf.

Beim Ausführungsbeispiel gemäß Figur 4 befindet sich in der Bohrung 13 ein Einsatz 50 mit einer druckraumseitigen Stirnfläche 54 und einer sensorseitigen Stirnfläche 55. Der Einsatz 50 weist axial verlaufende, druckübertragende Kanäle 51 und beispielsweise radial verlaufende, schwingungsdämpfende Ringräume 52 auf. Der Einsatz 50 ist - wie der Einsatz 30 in Figur 1 und 2 - an die Bohrung 13 im Durchmesser angepasst und im Wesentlichen spielfrei in die Bohrung 13 eingesetzt. An der druckraumseitigen Stirnfläche 54 weist der Einsatz 50 ebenfalls eine konische Stützfläche 53 auf, die am konischen Abschnitt 16 der Bohrung 13 aufliegt. Um eine axiale Verschiebung des Einsatzes 50 innerhalb der Bohrung 13 zu verhindern, ist zwischen einer Auflagefläche am Drucksensor 20 und der sensorseitigen Stirnfläche 55 des Einsatzes 50 die bereist in Figur 1 dargestellte Druckfeder 25 angeordnet, so dass der Einsatz 50 innerhalb der Bohrung 13 axial vorgespannt ist.

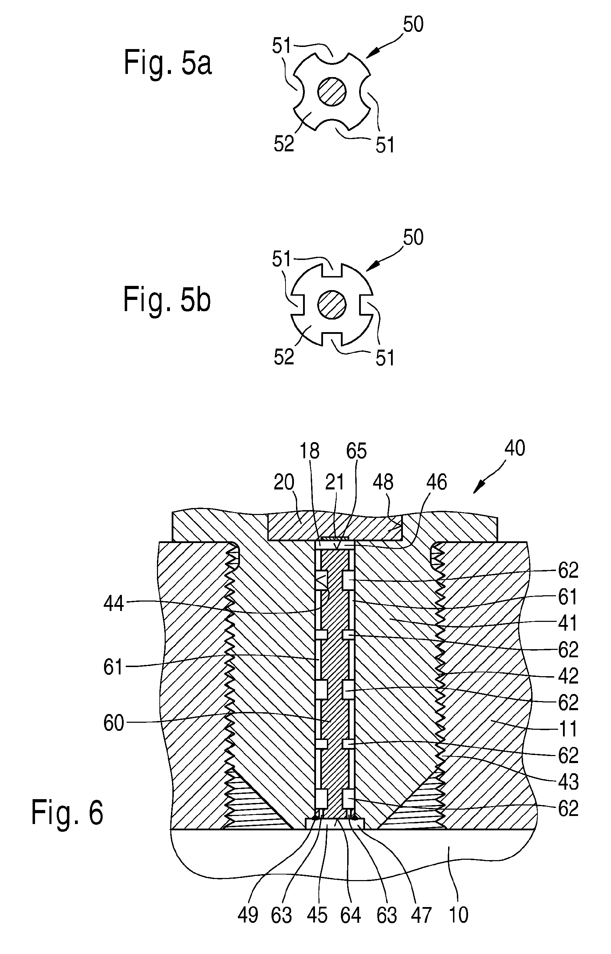

Die im Einsatz 50 ausgebildeten Kanäle 51 weisen beispielsweise die in Figur 5a und 5b dargestellten Querschnittsprofile auf und verbinden die Brennerkammer 10 mit der Druckkammer 18. Dabei sind die an der Mantelfläche des Einsatzes 50 verlaufenden axialen Kanäle 51 gemäß Figur 5a mit einem halbkreisförmigen Querschnitt und gemäß Figur 5b mit einem rechteckförmigen Querschnitt ausgeführt.

Das Ausführungsbeispiel gemäß Figur 6 zeigt ein Sensorbauteil 40 mit einem Einschraubgehäuse 41. Das Einschraubgehäuse 41 weist ein Gewinde 42 auf, das in eine Gewindeaufnahme 43 der Brennraumwand 11 der Brennkraftmaschine eingeschraubt wird. Im Einschraubgehäuse 41 ist eine axial verlaufende Bohrung 44 mit einer druckraumseitigen, inneren Öffnung 45 und einer sensorseitigen, äußeren Öffnung 46 ausgebildet. An der inneren Öffnung 45 ist die axiale Bohrung 44 von einem erweiterten Ringraum 47 umgeben. An der äußeren Öffnung 46 mündet die Bohrung 44 in eine Aufnahme 48, in der der Drucksensor 20 fixiert ist, wobei dem Drucksensor 20 auch hier ein Raum als Druckkammer 18 vorgeschaltet ist.

Innerhalb der Bohrung 44 befmdet sich ein Einsatz 60 mit einer druckraumseitigen Stirnfläche 64 und einer sensorseitigen Stirnfläche 65, der die im Zusammenhang mit den Ausführungsbeispielen in Figur 1 und 4 beschriebenen Ausführungsformen aufweisen kann. Beim Ausführungsbeispiel gemäß Figur 6 weist der Einsatz 60 analog dem Ausführungsbeispiel in Figur 4 drückübertragende Kanäle 61 mit druckschwingungsdämpfenden Ringräumen 62 auf. Der Einsatz 60 ist gemäß Figur 6 an der druckraumseitigen Stirnfläche 64 entlang des inneren Umfangs des Ringraums 47 mit einer Schweißnaht 49 befestigt. Dadurch entfällt die in Figur 1 und 4 beschriebene axiale Fixierung mittels einer Druckfeder. An der druckraumseitigen Stirnfläche 64 weist der Einsatz 60 weiterhin beispielsweise entsprechend der Anzahl der Kanäle 61 Verbindungsbohrungen 63 auf, die eine Verbindung zwischen dem Druckraum 10 und den Kanälen 61 herstellen.

Die Kanäle 31, 51, 61 dienen zur Druckübertragung des im Druckraum 10 herrschende Drucks auf die Sensorfläche 21 des Drucksensors 20, wobei die Sensorfläche 21 beispielsweise eine Sensormembran sein kann. Die im Zusammenhang mit Figur 4 und 7 beschriebenen druckschwingungsdämpfenden Ringräume 32, 62 bewirken, dass Druckschwingungen und Resonanzen bei der Druckübertragung auf den Drucksensor 20 weitestgehend unterbunden werden. Es ist aber genauso denkbar, einen von den Kanälen 31 abzweigenden Resonatorraum (Hemholtz-Resonator) zur Dämpfung einzusetzen.

Der Phasenverzug und die Dämpfung des Sensorsignals sind annähernd systematisch und können durch entsprechende Kennfelder in einem Steuergerät korrigiert werden. Voraussetzung für einen Langzeiteinsatz ist es außerdem, dass sich die Kanäle 31, 51, 61 nicht durch Verkokung zusetzen.

### Bezugszeichenliste

- 10: Druckraum
- 11: Brennraumwand
- 13: Bohrung
- 14: innere Öffnung
- 15: äußere Öffnung
- 16: konischer Abschnitt
- 17: Aufnahme
- 18: Druckkammer
- 20: Drucksensor
- 21: Sensorfläche
- 25: Druckfeder
- 30: Einsatz
- 31: druckübertragender Kanal
- 33: konische Stützfläche
- 34: druckraumseitige Stirnfläche
- 35: sensorseitige Stirnfläche
- 40: Sensorbauteil
- 41: Einschraubgehäuse
- 42: Gewinde
- 43: Gewindeaufnahme
- 44: axiale Bohrung
- 45: druckraumseitige Öffnung
- 46: sensorseitige Öffnung
- 47: Ringraum
- 48: Aufnahme
- 49: Schweißnaht
- 50: Einsatz
- 51: druckübertragender Kanal
- 52: druckschwingungsdämpfender Raum
- 53: konische Stützfläche
- 54: druckraumseitige Stirnfläche
- 55: sensorseitige Stirnfläche
- 60: Einsatz
- 61: druckübertragender Kanal
- 62: druckschwingungsdämpfender Raum
- 63: Verbindungsbohrungen
- 64: druckraumseitige Stirnfläche
- 65: sensorseitige Stirnfläche

## Patentansprüche

1. Anordnung zur Druckerfassung in einem Druckraum, insbesondere in einem Brennraum einer Brennkraftmaschine, wobei der Druckraum von einer Druckraumwand begrenzt ist, in der eine Bohrung eingebracht ist, die vom Druckraum zu einem Drucksensor führt und über die der im Druckraum herrschende Druck auf den Drucksensor übertragen wird, **dadurch gekennzeichnet, dass** in die Bohrung (13) ein Einsatz (30, 51, 61) eingesetzt ist, der mindestens einen druckübertragenden Kanal (31, 51, 61) aufweist.

2. Anordnung nach Anspruch 1, **dadurch gekennzeichnet, dass** sich der druckübertragende Kanal (31, 51, 61) vom Druckraum (10) zum Drucksensor (20) hin verengt.

3. Anordnung nach Anspruch 1, **dadurch gekennzeichnet, dass** sich der druckübertragende Kanal (31, 51, 61) vom Druckraum (10) zum Drucksensor (20) hin erweitert.

4. Anordnung nach Anspruch 2 oder 3, **dadurch gekennzeichnet, dass** die Verengung oder die Erweiterung des druckübertragenden Kanals (31, 51, 61) kontinuierlich verläuft.

5. Anordnung nach einem der Ansprüche 1 bis 4, **dadurch gekennzeichnet, dass** der druckübertragende Kanal (31, 51, 61) mit mindestens einem druckschwingungsdämpfenden Raum in Verbindung steht.

6. Anordnung nach Anspruch 5, **dadurch gekennzeichnet, dass** der Einsatz (50, 60) mindestens eine mit dem druckübertragenden Kanal (51, 61) kommunizierende Erweiterung (52, 62) aufweist, die den druckschwingungsdämpfenden Raum ausbildet.

7. Anordnung nach Anspruch 6, **dadurch gekennzeichnet, dass** die Erweiterung (52, 62) einen den Einsatz (50, 60) umgebenden Ringraum ausbildet.

8. Anordnung nach einem der vorhergehenden Ansprüche, **dadurch gekennzeichnet, dass** in die Mantelfläche des Einsatzes (30, 50, 60) mehrere radial gleichmäßig verteilte druckübertragende Kanäle (31, 51, 61) eingearbeitet sind.

9. Anordnung nach einem der vorhergehenden Ansprüche, **dadurch gekennzeichnet, dass** die druckübertragenden Kanäle (31, 51, 61) eine halbkreisförmige und/oder rechteckförmige Querschnittsform aufweisen.

10. Anordnung nach einem der vorhergehenden Ansprüche, **dadurch gekennzeichnet, dass** der Einsatz (30, 50, 60) in der Bohrung (13) kraftschlüssig, formschlüssig und/oder stoffschlüssig befestigt ist.
